# EUROPEAN PATENT APPLICATION

(11) **EP 1 645 837 A1**
(43) Date of publication of application: **12.04.2006**
(21) Application number: 04405634.9
(22) Date of filing: 08.10.2004
(51) Int. Cl.: G01B 9/02, G01P 3/36, G01S 17/08

(54) **Device for the measurement of a displacement of an object using a self-mixing technique**

(71) Applicant: Berner Fachhochschule Hochschule für Technik und Architektur Biel, 2501 Biel (CH)
(72) Inventor: Meier, Christoph, 2560 Nidau (DE); Bühler, Steeve, 2610 St-Imier (CH)
(74) Representative: Liebetanz, Michael

(57) **Abstract**

A device for the measurement of a displacement of an object (2) uses a self-mixing technique. A laser (1) such as a laser diode having a laser cavity and allowing mode hopping to occur is used in conduction with an external cavity (12) encompassing the laser cavity (11) and being linked to said object (2). A first photo detector (31) is provided to measure the AM variation of the laser signal of the laser (1). The device further comprises an optical-frequency-to-intensity-converter (3) receiving a laser signal of the laser (1). This converter can be a Fabry-Perot resonator eg. in the form of a PMMA film. A second photo detector (4) is provided receiving the converted signal (24) transmitted through the optical-fequency-to-intensity-converter (3) to generate a frequency modulated output signal representing the displacement or velocity to be measured.

## Description

### Background of the invention

The invention relates to a device for the measurement of a displacement or velocity of an object using a self-mixing technique comprising a laser having a laser cavity and allowing mode hopping to occur, an external cavity encompassing the laser cavity and being linked to said object and a photo detector to measure the variation of the laser signal.

It is known from the prior art to use so called Self-Mixing techniques (SM techniques) for interferometric measurements, see S. Donati, G. Giuliani and S.Merlo "Laser Diode Feedback Interferometer for the Measurement of Displacement without Ambiguity" in IEEE Journal Quantum Electronics QE-31 (1995), pages 113 to 119 or G. Giulani, M. Norgia, S. Donati, Th. Bosch "Laser Diode self-mixing technique for sensing applications" in J. of Pure and Applied Optics (2002) (6), pages 283 - S294. These techniques have proven to be far more cost effective than standard coherent methods. However, it has to be noted that these techniques suffer from several drawbacks. Lang and Kobayashi have already shown in "External Optical Feedback Effects on Semiconductor Injection Laser Properties" in IEEE Journal Quantum Electronics QE-16 (1980), pages 347 to 355, that with a back scattering of light into a laser diode such measurement position becomes very important. The signal to noise ratio (SNR) is sensitive to the backscattered intensity and to the measurement position. To overcome those problems, a good stability of the emitted mode has to be achieved, e.g. by constant reinjected light intensity and the selection of an optimal measurement position.

### Summary of the invention

It is therefore an object of the invention to provide for a device according to the preamble of the main claim to overcome the cited drawbacks and to provide a even less costly but nevertheless reliable sensor which can be used under any circumstances and positions, especially measurement positions.

This object is achieved with the features of a device according to the characterizing part of claim 1, whereby said device further comprises an optical-frequency-to-intensity-converter receiving a laser signal of the laser and a second photo detector receiving the converted signal transmitted through the optical-frequency-to-intensity-converter.

The method according to the invention delivers a new signal from a SM system. Said signal is less sensitive to the measurement position and reinjected light intensity and results therefore in a better SNR. Furthermore it offers the possibility of stabilizing the mean emitted optical frequency, to reduce drift effects.

The invention is based on the insight that instead of measuring the variations of the laser power (i.e. an AM measurement) as previously suggested the variations of the optical frequency are measured. Said information is not directly available. The conversion element used to extract said information form a signal can be a Fabry-Perot resonator, changing changes of wavelength into a change of the reflected intensity. The disclosed embodiments of the invention show choices of depth and refractive index of a chosen Fabry-Perot resonator. Furthermore the chosen angle contributes to the resulting SNR gain in view of the AM signal.

It is advantageous that the two signals AM and FM may be in quadrature giving information about the direction of the probed object.

It is a further advantage of the device and method according to the invention that the finesse of the resonator does not need to be very high. A simple PMMA film (polymethyl methacrylate film) can be used as Fabry-Perot resonator.

The present method yields a new type of signal using another mode of operation with the self-mixing effect. The mode of operation can be called single mode. The SNR and sensitivity to feedback intensity have been improved. A further advantage is the possibility to reduce the drift by controlling the emitted frequency. Due to the weak quality, i.e. low resolving power, needed for the converter, a Fabry-Perot resonator can be used so that additional costs are small as compared to known self-mixing techniques. On the other hand, the gain in signal quality (FM over AM) allows simplifying the amplification stage and signalprocessing algorithm. Classical Fourier analysis is performed to interpret the resulting signals.

### Brief description of the drawings

Further objects and advantages are achieved through the features of the subclaims. Exemplary embodiments of the invention are disclosed in the following description in which:
- Fig. 1: shows a diagram with the general components of a self-mixing system,
- Fig. 2: shows a self-mixing system according to a first embodiment of the invention with general components according to Fig. 1,
- Fig. 3: shows a self-mixing system according to a second embodiment of the invention with general components according to Fig. 1,
- Fig. 4: shows a diagram of a stabilization and signal treatment unit for the self-mixing system according to the invention,
- Fig. 5: shows a diagram of a signal treatment unit for the self-mixing system according to the invention,
- Fig. 6: shows representations of signal amplitudes for FM and AM signals measured with the self-mixing system according to the invention,
- Fig. 7: shows another diagram with the general components of a self-mixing system, and
- Fig. 8: shows a self-mixing system according to a third embodiment of the invention with general components according to Fig. 7.

### Description of a preferred embodiment of the invention

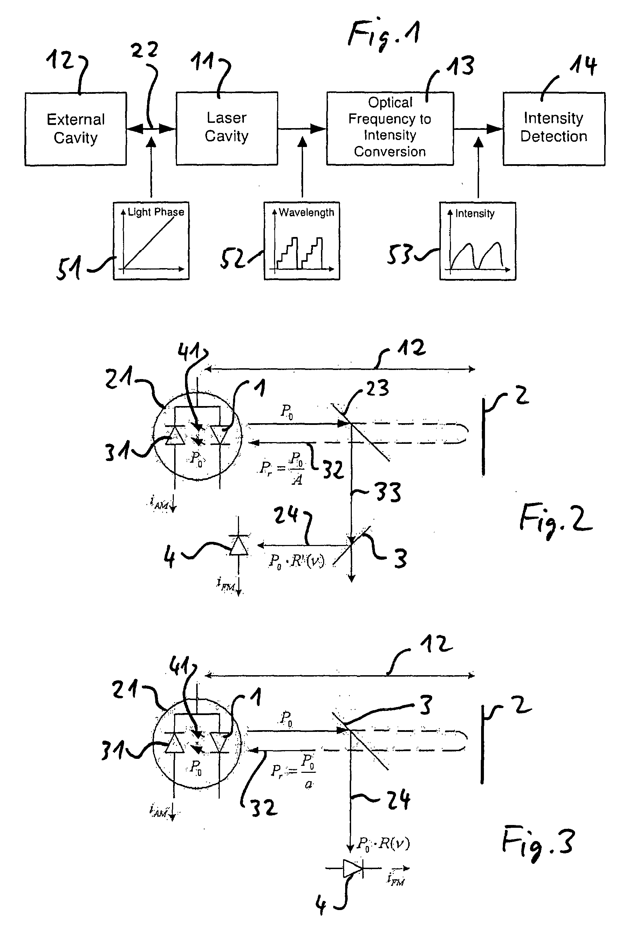

Fig. 1 shows a diagram with the general components of a self-mixing system. Said Fig. 1 is explained together with Fig. 2 showing a self-mixing system according to a first embodiment of the invention.

The self-mixing technique is used for interferometric measurements. A self-mixing system comprises a laser 1 having a laser cavity 11. The laser 1 and its laser cavity 11 are coupled via the light path 22 to an external cavity 12 having one backscattering reflective surface 2. The backscattered light 32 produces mode hopping within the laser 1. The emitted mode is dependent on the coupled light phase which itself depends on a number of factors, e.g. external cavity length 12, Doppler shift, etc.. A converter 13 is used to convert optical frequency jumps into intensity variations, which can be detected by an intensity detector 14.

In the first embodiment according to Fig. 2 the converter 13 comprises a beam-splitter 23 and a thin film 3 which will be described below in detail. The intensity detection is provided through a photo detector 4. Within Fig. 2 the emitted laser light is coupled out from the external cavity 12 through a beam-splitter 23 oriented at, e.g., 45 degrees. Other angles of orientation are possible. Said light portion 33 enters a thin film 3 acting as a Fabry-Perot resonator under an angle of, e.g., 45 degrees. The properties of the Fabry-Perot resonator greatly depend on said angle, which may be predefined or adjustable. The chosen angle contributes to the resulting (signal-noise-ratio) SNR gain in view of the AM signal. The light 24 transmitted through the thin film 3, e.g. the Fabry-Perot resonator, is intensity modulated and thus delivers to the detector 4 phase information needed for the interferometric measurement.

The thin film 3 used may be a PMMA film with a thickness of several 10 micrometer, e.g. between 10 and 100 micrometers. The thicker the thin film 3 is made, the closer are the two separated mode signals depending on the refractive index of the film material. It has to be noted that the thin film 3 can be replaced by any other conversion element 13 known to the people skilled in the art converting optical frequency variations to intensity variations. The photo detector 4 can be of any type commercially available for the wavelength of the laser light 24 and the laser 1 can be of any type known to someone skilled in the art allowing mode hopping to occur. In the embodiment according to Fig. 2 a laser diode package 21 is used. Such a laser diode package 21 usually comprises the laser diode 1 as such and a monitor diode 31 receiving light 41, e.g. from the back surface of the laser diode cavity 11. Said photo detector 31 is normally used within such a laser diode package 21 to control the laser diode 1, especially for amplitude measurement of the emitted light. In this case said information is used to obtain the AM-signal of the laser diode 1.

Fig. 1 shows with boxes 51, 52, and 53 the fundamental values of the three different information carriers. The backscattered light has phase information 51 relating to the distance 12 between the backscattering surface 2 and the device itself. The output from the laser cavity 11 comprises mode hoppings and therefore a wavelength dependent signal 52. After conversion in element 13 the intensity detection 14 can rely on a converted signal.

Fig. 2 shows the first embodiment with a beam splitter 23 to direct the light from the laser cavity to the thin film 3. According to Fig. 3 a second embodiment is shown wherein there is no beam splitter 23 anymore. The element 3, the optical-frequency-to-intensity-converter, is directly positioned in the light path of the external cavity 12 and couples out the relevant converted signal 24. It is preferred that said optical-frequency-to-intensity-converter 3 is a simple element, e.g. a Fabry-Perot-resonator, which can effectively produced by a stretched PMMA film. The reflectivity of such a thin film 3 is R(*v*) and with an output power of the laser of *P*₀ the output current *i*_{*FM*} of the photo detector 4 is proportional to *P*₀.R(*v*). Said reflectivity is periodical with *v*.

In a traditional self-mixing system as disclosed in S. Donati, G. Giuliani and S.Merlo "Laser Diode Feedback Interferometer for the Measurement of Displacement without Ambiguity" in IEEE Journal Quantum Electronics QE-31 (1995), pages 113 to 119, a photo detector 31 is inserted into the beam of the laser 1. In case of a laser diode package 21 as shown in the embodiments of the invention, the monitor photodiode 31 can be used for this measurement. The AM signal *i*_{*FM*} is proportional to the output power *P*₀ of the laser 1 and to the cosinus of the frequency.

The thin film 3 (either according to Fig. 2 or to Fig. 3, only the summed up reflectivity is different R(*v*) or R'(*v*) , respectively) reflects light onto the photo detector 4. According to the embodiment of Fig. 2 the thin film 3 does not influence the reinjected light. According to the embodiment of Fig. 3 the thin film 3 has an influence on the reinjected light that will vary as a function of the external resonator length 12. The thin film 3 operates as a Fabry-Perot resonator and we use it in a way that the frequency variation remains within the mainly linear part of the sinusoidal reflectivity. The power of the FM signal comprises a part of additional reflected power proportional to the difference between the emitted laser frequency and the frequency related to the maximum slope of the reflectivity curve. The power of the FM signal comprises additionally a part of information about the phase of the reinjected light.

It is one advantage of the invention that the signal-noise ratio for the FM signal is much greater than the signal-noise ratio for the AM signal. Said signal-noise ratio of the FM signal can even be improved by improving the resolving power of the optical-frequency-to-intensity-converter 3, e.g. improving the resolving power of the Fabry-Perot resonator, for example by increasing the surface reflectivity or the index of refraction. Surface reflectivity can be improved by providing a reflective layer on one or both sides of said PMMA film or by using another converter having a higher finesse.

The above mentioned signals can be isolated and used for the stabilization of the circuitry. By measuring the emitted power before and after the thin film 3, e.g. by the photo diodes 4 and 31, the constant amount of reflected light can be eliminated. By filtering the AC and DC parts of the signal, the above mentioned signals of the additional reflected power 64 proportional to the difference between the emitted laser frequency and the frequency related to the maximum slope of the reflectivity curve and the power 62 with the part of information about the phase of the reinjected light can be isolated.

Fig. 4 shows a diagram of a stabilization and signal treatment unit for the self-mixing system according to the invention. All features relating to the same elements have the same reference numerals in all figures. The signal generated by the photodiode 4 is amplified and the AC part (filtered by high-pass filter 61) constitutes the isolated signal 62 of the part of information about the phase of the reinjected light. The signal of the output power of the laser 1, detected by the diode 31 is added (subtracted) from the signal generated by the photodiode 4. This signal passes through a low-pass filter 63 and constitutes the additional reflected power 64 proportional to the difference between the emitted laser frequency and the frequency related to the maximum slope of the reflectivity curve. Said DC signal can be used as feedback signal for the closed loop control as shown in Fig. 4.

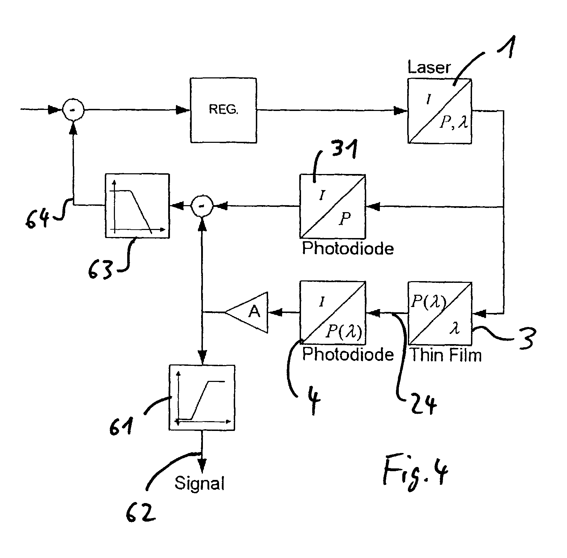

Fig. 5 shows a diagram of a signal treatment unit for the self-mixing system according to the invention. The laser diode package 21 is positioned behind an optical system, schematically represented by lens 65. Although it is preferred to use the minimum number of optical elements, it is nevertheless possible to use a complex optical imaging system. The backscattering surface 2 is mounted on a piezo actuator 66 driven by a function generator. The backscattering surface 2 according to Fig. 5 is a mirror, but the surface 2 can be a live surface to be measured as a (metallic) surface of a watch, a portion of a larger surface to be tested. The only condition on said surface is its ability to backscatter a significant amount of light to obtain the self mixing effect of the device. It is therefore possible to mount the device in the vicinity of the element to be tested and to use a surface of said element as surface 2 or to provide the element to be measured with a special surface 2 mounted on said element.

The output signal 71 of the diode 4 is provided to oscilloscope 68. The laser diode driver 69 is connected with the laser diode package 21, controls the power of the laser diode 1 via the monitor diode 31 and provides the oscilloscope 68 with the AM signal 72 being proportional to the signal of the monitor diode 31.

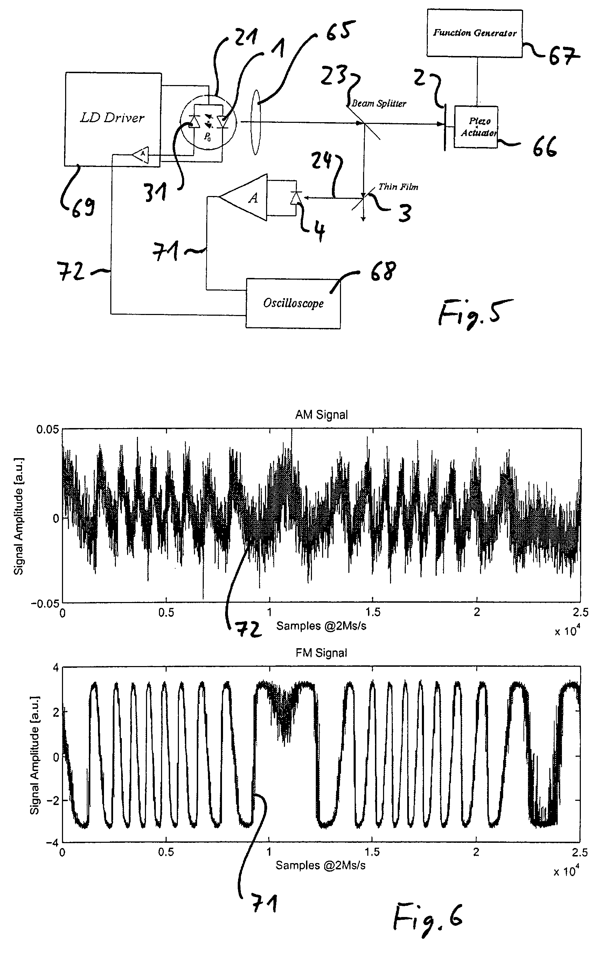

Fig. 6 shows representations of signal amplitudes for FM and AM signals 71 and 72, respectively, measured with the self-mixing system according to the invention and shown in Fig. 5. A constant current is applied to the laser diode 1. Monitor 31 and external 4 photodiode currents are amplified with transimpedance amplifiers. The backscattering surface 2, e.g. a plan mirror, is moved using a piezo-actuator 66 driven by a function generator 67. The motion is triangular with 3 micrometer movement with a frequency of 100 Hertz. It can clearly be seen that the AM signal 72 has a lesser SNR than the FM signal 71 with comparable amplification quality. It is advantageous that the two signals AM and FM, 72 and 71, are in quadrature giving information about the direction of the probed object, e.g. the mirror 2. The signals shown as in Fig. 6 are transformed by classical Fourier analysis to obtain resulting signals for displacement and velocity information.

As mentioned above the choice of a laser diode 1 is convenient but not necessary. Any mode hopping supporting laser can be used. This can be for example a solid-state laser. It can be noted that the invention uses the mode hopping events whereas according to the prior art, efforts are put into the stabilization to avoid such mode hopping events. A Fabry-Perot resonator has been chosen as the frequency-to-intensity converter. Other converters can be chosen performing said operation of converting frequency changes into intensity changes. It is just convenient and cost-effective to use a thin film for this application, which may be coated to increase its reflectivity. It is clear that the shown embodiments only show possibilities for the orientation of the beam-splitter and/or frequency-to-intensity converter. There may be additional optical elements as long as the principles of the device according to the invention are followed as they are worded in the accompanying claims.

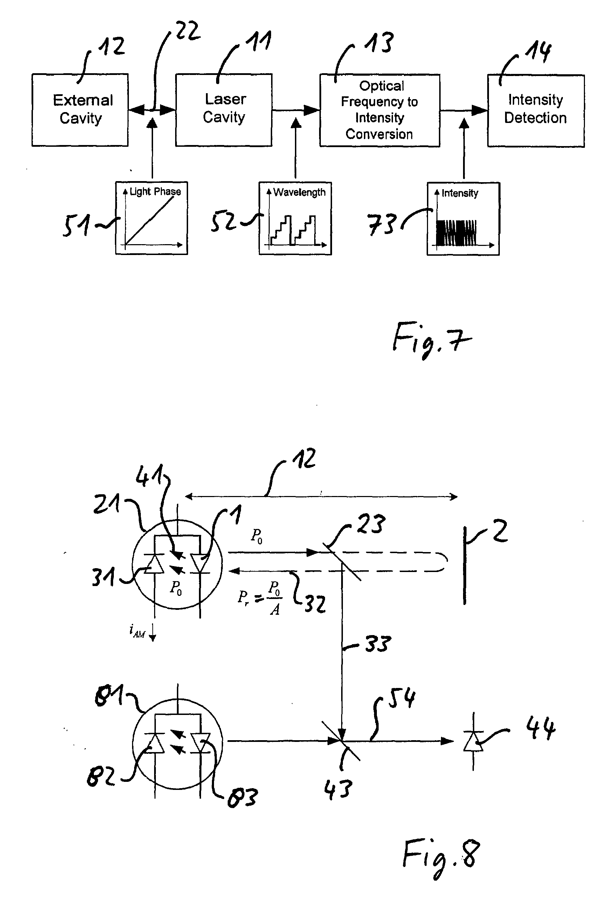

Fig. 7 shows another diagram with the general components of a self-mixing system similar to Fig. 1. Said Fig. 7 is explained together with Fig. 8 showing a self-mixing system according to a third embodiment of the invention. Same features within said third embodiment receive the same numerals as in the first two embodiments. The self-mixing system comprises a laser 1 having a laser cavity 11. The laser 1 and its laser cavity 11 are coupled via the light path 22 to an external cavity 12 having one backscattering reflective surface 2. The backscattered light 32 produces mode hopping within the laser 1. A converter 13 is used to convert optical frequency jumps into intensity variations, which can be detected by an intensity detector 14.

In the third embodiment according to Fig. 8 the converter 13 comprises a first beam-splitter 23 and a second beam-splitter 43. The intensity detection is provided through a photo detector 44 subsequently called beat diode 44. As before different angles of orientation of the beam-splitter 23 and 43 are possible. Said light portion 33 combines in the path 54 with light coming from a reference laser diode 83.

Reference laser diode 83 is preferably included in a package 81 with an associated monitor diode. The light emitted by the reference laser diode 83 transmitted through the beam-splitter 43 is intensity modulated through signal combination of the two different laser emissions and thus delivers to the detector 44 phase information needed for the interferometric measurement.

It has to be noted that the reference laser diode 83 has to be stabilized in a wave length region appropriate for creating the necessary beat signal and thus converting optical frequency variations to intensity variations. The photo detector 44 can be of any type commercially available for the wavelength of the laser light 54 and the lasers 1 and 83 can be of any type known to someone skilled in the art allowing mode hopping to occur. In the embodiment according to Fig. 8 two laser diode package 21 and 81 are used. The photo detector 31 is used for the amplitude measurement of the emitted light. In this case said information is used to obtain the AM-signal of the laser diode 1.

Fig. 7 shows with boxes 51, 52, and 73 the fundamental values of the three different information carriers. The backscattered light has phase information 51 relating to the distance 12 between the backscattering surface 2 and the device itself. The output from the laser cavity 11 comprises mode hoppings and therefore a wavelength dependent signal 52. After conversion through mixing of the two laser beams behind beam-splitter 43 the intensity detection 14 can rely on a high frequency converted signal.

As explained above, the sum of the two laser beams is created with coherent addition, and due to the fact that the lasers belong different optical frequencies, the intensity will beat with the frequency difference of the two lasers 1 and 83. With mode hopping, the frequency of the self-mixing laser 1 changes with the phase of the reinjected light. Thus, the beat frequency detected by diode 44 will depend on this phase. The intensity finally measured (for a linear moved target) will be frequency modulated.

A number of applications of the method and device are conceivable, e.g. the measurement of the velocity of small elements as elements within a mechanical watch or the measurement of a distance to a point of a surface and in this respect the curvature of said surface, if the device or the surface is displaced vertically to the laser beam. The main advantage of the method and device of the invention is the reduction of costs to use interferometric techniques because the interferometric head can be realized in a very simple and cost efficient way. Two different ways have been demonstrated in the embodiments; one relying on only one laser source and one thin film and another relying on two similar laser sources with beam combining optics to generate a beat signal.

## Claims

1. A device for the measurement of a displacement or velocity of an object (2) using a self-mixing technique comprising a laser (1) having a laser cavity (11) and allowing mode hopping to occur, an external cavity (12) encompassing the laser cavity (11) and being linked to said object (2) and a first photo detector (31) to measure the variation of the laser signal of the laser (1), **characterized in that** the device further comprises an optical-frequency-to-intensity-converter (13) receiving a laser signal of the laser (1) and a second photo detector (4; 44) receiving the converted signal (24; 54) transmitted through the optical-frequency-to-intensity-converter (13; 3, 83).

2. The device according to claim 1, wherein the optical-frequency-to-intensity-converter (3) is a Fabry-Perot resonator.

3. The device according to claim 2, wherein the optical-frequency-to-intensity-converter (3) is a thin film, especially a PMMA film.

4. The device according to one of claims 1 to 3, wherein the optical-frequency-to-intensity-converter (3) is positioned within the external cavity to couple out the converted signal (24) .

5. The device according to claim 1, wherein the optical-frequency-to-intensity-converter (83) comprises a reference laser and optic elements to combine the signal of the laser (1) with its output beam in a converted signal (54).

6. The device according to one of claims 1 to 5, wherein the laser (1) is a diode laser and the first photo detector (31) is the monitor diode of the diode laser (1).

7. The device according to one of claims 1 to 6, wherein the external cavity (12) comprises a back scattering surface (2) at its end opposite to the laser (1).

8. The device according to claim 7, wherein the back scattering surface (2) used is part of the object of which the displacement is to be measured.

9. The device according to claim 7, wherein the back scattering surface (2) is a mirror element affixed to the object of which the displacement is to be measured.

10. A method for the measurement of a displacement or velocity of an object (2) using a self-mixing technique wherein a surface (2) of said object is subjected to a laser signal generated by a laser (1) allowing mode hopping to occur, wherein the laser signal (32) backscattered from the surface (2) is reinjected into the laser (1) and wherein the laser signal (1) is coupled out through a optical-frequency-to-intensity-converter (13) to generate a frequency modulated output signal (62, 71) representing the displacement or velocity to be measured.
